# EUROPÄISCHE PATENTANMELDUNG

(11) **EP 1 363 068 A2**
(43) Veröffentlichungstag der Anmeldung: **19.11.2003**
(21) Anmeldenummer: 03101300.6
(22) Anmeldetag: 09.05.2003
(51) Int. Cl.: F21V 7/06, B60Q 3/02

(54) **Fahrzeugleuchte mit einem Leuchtmittel und einem hohlen oder becherförmigen Reflektor**

(30) Priorität: 17.05.2002 DE 10222129
(71) Anmelder: Hella KG Hueck & Co., 59552 Lippstadt (DE)
(72) Erfinder: Zwick, Hubert, 70173, Stuttgart (DE); Müller, Bernd Hella Innenleuchten Sys. GmbH, 79650 Schopfheim (DE); Nachtigall, Klaus Hella Innenleuchten-Sys. GmbH, 79199 Kirchzarten (DE)

(57) **Zusammenfassung**

Bei einer Fahrzeugleuchte (100) mit einem Leuchtmittel (102), mit einem hohlen oder etwa becherförmigen Reflektor (101) und mit zumindest einem Mittel zum Streuen des von dem Leuchtmittel (102) abgegebenen und von dem Reflektor (101) abgestrahlten Lichts wird die Reflektorfläche dadurch gebildet, dass zunächst eine Parabel mit Brennpunkt, der der Ort des Leuchtmittels (102) ist, und mit einer zugehörigen Parabelachse konstruiert. Dann wird diese Parabel im Scheitel geteilt, ein Teil gelöscht oder weggedacht und der andere Teil um den Brennpunkt um einen Winkel in der Richtung verkippt oder verschwenkt, in der sich der Scheitel von der ursprünglichen Parabelachse entfernt, das heißt, das der Öffnung des Reflektors (101) nahe Ende der Parabel wird in Richtung zu der Parabel- oder Längsmittelachse (106) hin verschwenkt. Durch Rotation dieser verkippten Parabel um die ursprüngliche Parabelachse oder Längsmittelachse (106) wird die Reflektorinnenfläche gebildet, wobei auch nur Teile des Umfangs oder des Längsschnitts des Reflektors (101) durch entsprechende Flächenstücke gebildet sein können (Fig. 1).

## Beschreibung

Die Erfindung betrifft eine Fahrzeugleuchte mit einem Leuchtmittel, mit einem hohlen oder etwa becherförmigen Reflektor und mit zumindest einem Mittel zum Streuen des von dem Leuchtmittel abgegebenen und von dem Reflektor abgestrahlten Lichts, beispielsweise mit einer an der Öffnung des Reflektors angeordneten Streuscheiba und/oder mit am Reflektor angeordneten Streufacetten, wobei die Kontur eines Längsschnitts durch die Längsmittelebene des Reflektors zumindest bereichsweise eine Parabel ist, in deren Brennpunkt das Leuchtmittel angeordnet ist beziehungsweise dessen Brennpunkt in dem Leuchtmittel liegt.

Derartige Fahrzeugleuchten sind beispielsweise als Innenleuchten bekannt und haben in der Regel einen rotationssymmetrischen oder zumindest über einen Teil seines Umfangs reichenden Paraboloidreflektor, der das von dem Leuchtmittel nahe dem oder im Brennpunkt abgegebene Licht an der Öffnung weitgehend parallel zur Achse des Paraboloids abstrahlt. Daraus ergibt sich ein Lichtfleck, der im wesentlichen der Größe der Öffnung des Reflektors entspricht. Um dabei eine bestmögliche Ausnutzung des abgegebenen Lichts zu erreichen und einen ausreichend großen Lichtfleck zu erzeugen, hat ein solcher paraboloider Reflektor eine relativ große axiale Ausdehnung oder Bautiefe und vor allem auch eine entsprechend große Öffnung, benötigt also relativ viel Platz.

Der Erfindung liegt die Aufgabe zugrunde, eine Fahrzeugleuchte der eingangs genannten Art zu schaffen, mit welcher bei gleicher Baugröße mehr Licht im Sinne größerer Helligkeit und/oder im Sinne einer größeren beleuchteten Fläche abgegeben werden kann.

Zur Lösung dieser Aufgabe ist die eingangs definierte Fahrzeugleuchte dadurch gekennzeichnet, dass der Längsschnitt zumindest eines Teils des Reflektors durch seine Längsmittelebene über wenigstens einen Teil seiner Erstreckung den Verlauf einer Parabel aufweist, die gegenüber der Längsmittelachse um ihren Brennpunkt zu dieser Achse so verschwenkt ist, dass ihr öffnungsnaher Bereich der Längsmittelachse angenähert ist, und dass wenigstens ein Teil des Umfangs des Reflektors eine Fläche hat, die durch Rotation der verschwenkten Parabel um die Längsmittelachse gebildet ist.

Dadurch ergibt sich als becherförmiger Reflektor eine rotationssymmetrische Fläche oder ein Teil davon, die von einem Paraboloid abweicht, obwohl die Längsschnitt-Kontur eine - allerdings gekippte beziehungsweise verschwenkte - Parabel ist. Das im Brennpunkt dieser Parabel beziehungsweise des von ihr gebildeten Hohlkörpers abgegebene Licht wird dadurch gegenüber der normalen parallelen Lenkung der gesamten Lichtausbeute entsprechend dem Kipp- oder Schwenkwinkel ausgelenkt, so dass sich ohne das oder die Mittel zum Streuen des Lichts ein Lichtring ergäbe.

Da der äußerste Rand des Reflektors zur Mittelachse hin nach innen versetzt wird, wird bei gegebener Einbautiefe ein Lichtkegel mit kleinerem Öffnungswinkel nicht erfasst, was bedeutet, dass mehr Licht erfasst beziehungsweise abgegeben wird.

Eine besonders zweckmäßige, effektive und einfache Fahrzeugleuchte ergibt sich, wenn der Reflektor insgesamt rotationssymmetrisch ausgebildet und seine Längsschnitte mit ihrem öffnungsnahen Bereich zur Längsmittelachse hin verkipptes oder verschwenkte übereinstimmende Parabeln sind. Bei dieser rotationssymmetrischen Gestaltung ergibt sich der schon erwähnte Lichtring, von welchem nur Stücke entstehen, wenn nur ein Teil des Umfangs die erfindungsgemäße parabelförmige Kontur mit verkippter Parabel aufweist.

Der Reflektor kann ganz oder teilweise durch eine oder mehrere bis zu ihrem Scheitel verlaufende und mit dem der Öffnung des Reflektors nahen Seite zur Längsmittelachse hin verkippte Parabeln gebildet sein. Somit lässt sich der Lichtverlauf auch dadurch beeinflussen, ob der parabelförmige Längsschnitt über die gesamte axiale Erstreckung des Reflektors verläuft oder nur über einen Teil davon.

Eine abgewandelte Ausführungsform der erfindungsgemäßen Fahrzeugleuchte kann dadurch gekennzeichnet sein, dass nur ein Stück oder ein Teil einer Parabel, nämlich ein bis zur Öffnung des Reflektors reichender Teil der Parabel zur Längsachse des Reflektors hin nach innen und das dem Brennpunkt nahe Stück oder Teil der Parabel nicht oder entgegengesetzt verschwenkt oder verkippt ist und dass diese Parabelstücke den Längsschnitt oder eine Meridianlinie wenigstens eines Teil-Umfangsbereichs des Reflektors bilden. Dadurch kann neben einem Lichtring, den der öffnungsnahe Parabelteil erzeugt, eine Lichtfläche oder ein weiterer Lichtring durch den dem Brennpunkt nahen Parabelteil erzeugt werden, wobei diese teilkreis- oder kreisförmigen und teilring- oder ringförmigen Lichtflächen durch das oder die Streumittel zu einer Lichtfläche verbunden werden können. In zweckmäßiger Weise können also Lichtflächen oder Lichtringe, die durch die Reflektorflächen, deren Längsschnitt verschwenkte oder verkippte Parabeln oder Parabelstücke sind, gebildet sind, durch Streumittel zu einer Lichtfläche verbunden sein, wobei Flächen, deren Längsschnitt durch eine verkippte Parabel oder ein verkipptes Parabelstück gebildet ist, einen Lichtring oder einen Teil eines Lichtringes und Reflektorflächen, deren Längsschnitt aus unverkippten Parabelstücken bestehen, einen kreisförmigen oder teilkreisförmigen Lichtfleck bilden, wenn diese nicht verkippten Parabelstücke dem Brennpunkt unmittelbar benachbart sind.

Ist also der dem Brennpunkt nahe Bereich des Reflektors durch ein Parabelstück gebildet, welches in keiner Richtung verkippt ist, sondern eine übliche paraboloide Fläche oder Teilfläche bildet, erzeugt dieser Teil des Reflektors einen konzentrischen, etwa kreisförmigen oder teilkreisförmigen Lichtfleck. Ist dieser Bereich jedoch durch eine Fläche gebildet, deren Längsschnitt ein entgegen dem sich anschließenden Reflektorbereich nach außen verkipptes Parabelstück ist, ergibt sich ein zweiter konzentrischer Lichtring.

In vorteilhafter Weise kann durch die Verschwenkung der den Längsschnitt des Reflektors bildenden Parabel um den Brennpunkt der dem Leuchtmittel nahe Bereich des Reflektors einen größeren Abstand von dem Leuchtmittel erhalten. Dennoch ist die Lichtausbeute so groß wie bei einem üblichen paraboloiden Reflektor.

Durch den größeren Abstand des dem Leuchtmittel nahen Bereich des Reflektors von dem Leuchtmittel können durch dieses auftretende Temperaturprobleme vermindert oder verhindert werden. Somit können auch Leuchtmittel eingesetzt werden, die eine höhere Energieabgabe und dabei insbesondere eine größere Beleuchtungsstärke haben. Eine solche Ausgestaltung ist also besonders günstig bei der Verwendung von Glühlampen. Dennoch ist gleichzeitig der erfasste Lichtstrom gegenüber einem üblichen Parabelreflektor mit derselben Brennweite erhöht.

Eine weitere Ausgestaltung der Erfindung kann eine abgewandelte Fahrzeugleuchte ergeben, bei welcher der Reflektor einen sektorweise von einer Kreisform abweichenden Umfang hat und neben einem oder mehreren Bereichen, deren Längsschnitt durch eine wenigstens bereichsweise verschwenkte oder verkippte Parabel gebildet ist, paraboloide - also durch normal verlaufende Parabeln gebildete - Abschnitte oder in anderer Weise gekrümmte Reflektorabschnitte aufweist. Eine solche Anordnung macht es möglich, das abgegebene Licht teils in der erfindungsgemäßen, teils in einer herkömmlichen Weise zu lenken und abzustrahlenn und dadurch auf gewünschte Abstrahlwinkel einzustellen. Durch eine solche sektorenweise unterschiedliche Gestaltung des Reflektors können also ganz bestimmte beleuchtete Flächen oder Lichtflecke erzeugt werden.

Eine weitere Ausgestaltung der Erfindung, die kombiniert mit den vorstehend geschilderten Merkmalen oder unabhängig davon anwendbar ist, kann darin bestehen, dass der Reflektor gestuft ist und die einzelnen Stufen aus im Längsschnitt nach innen gekippten und wenigstens über einen Teil um die Längsmittelachse rotierenden Parabelstücken oder an Parabelstücke angenäherten Kurvenstücken oder Geraden oder Bögen bestehen. Dadurch lassen sich gezielt Lichtringe oder Licht-Teilringe erzeugen, die durch das oder die Streumittel in geeigneter Weise zu einem Lichtfleck verbunden werden können.

Zweckmäßig ist es dabei, wenn die Kippwinkel einzelner Parabelstücke oder an Parabeln angenäherter Kurvenstücke innerhalb der Stufung des gestuften Reflektors unterschiedlich sind. Dadurch lässt sich gezielt auf relativ kleiner Baulänge eine gewünschte Lichtverteilung erzielen.

Besonders günstig ist es, bei einem erfindungsgemäßen, gestuften Reflektor, wenn die dem Brennpunkt und somit dem Leuchtmittel am nächsten liegende Stufe einen Längsschnitt in Form einer Parabel oder eines Parabel- oder sonstigen Kurvenstücks gegenüber anderen Stufen am wenigsten verkippt oder verschwenkt ist und der Verkippungswinkel der einzelnen Längsschnitt-Kurven zur Öffnung des Reflektors hin mehr und mehr zunimmt. Auf diese Weise kann gegebenenfalls sogar ohne weitere Streumittel eine geschlossene oder weitgehend geschlossene Lichtfläche mit hoher Helligkeit bei relativ kurzer Baulänge erzeugt werden, das heißt die gestufte Form des Reflektors ist gleichzeitig auch als Streumittel anzusehen. Da die Parabelstücke alle den selben Brennpunkt haben, erzeugen sie jeweils einen entsprechenden Lichtring, wobei durch die Verkippungswinkel der einzelnen Parabelstücke oder Reflektorstufen diese jeweils aneinander stoßen und eine geschlossene Lichtfläche bilden können.

Die erfindungsgemäße Fahrzeugleuchte kann ein Scheinwerfer, Fahrradscheinwerfer, ein Tagfahrlicht, eine Begrenzungsleuchte, eine Innenleuchte, ein Rücklicht oder eine beliebige sonstige Kraftfahrzeugleuchte sein. Besonders vorteilhaft ist sie als Innenleuchte geeignet, weil sie aufgrund ihrer platzsparenden Bauweise auch unter beengten Verhältnissen Anwendung finden kann. Dabei wird ausgenutzt, dass diese Fahrzeugleuchte im Gegensatz zu einem üblichen Paraboloidreflektor, der paralleles Licht erzeugt und in einiger Entfernung vom Reflektor einen Leuchtfleck von der Größe des Reflektors ergibt, einen Reflektor hat, der Licht in einem Kegelmantel reflektiert, dessen Dicke etwa der halben Reflektorgröße entspricht und ohne Streumittel auf einem beabstandeten Schirm einen leuchtenden Ring bildet, dessen Durchmesser vom Abstand des Reflektors zum Schirm abhängt und dessen Breite etwa der halben Reflektorgröße entspricht.

Nachstehend sind Ausführungsbeispiele der Erfindung anhand der Zeichnung näher beschrieben. Es zeigt in zum Teil erheblich schematisierter Darstellung:
- Fig. 1: einen Längsschnitt einer erfindungsgemäßen Fahrzeugleuchte, die als Innenleuchte ausgebildet und in den Himmel eines Fahrzeugs eingebaut ist, wobei zusätzlich zu dem erfindungsgemäßen Sammelreflektor noch ein Umlenkreflektor innerhalb des Gehäuses dieser Fahrzeugleuchte vorgesehen ist,
- Fig. 2: in schematisierter Darstellung einen Längsschnitt durch jeweils eine Hälfte eines erfindungsgemäßen Reflektors, wobei die obere Hälfte einen üblichen Paraboloidreflektor und die untere Hälfte einen erfindungsgemäßen Reflektor darstellt, bei welchem die den Längsschnitt bildende Parabel mit ihrem der Öffnung näheren Bereich zur Längsmittel- oder optischen Achse hin verkippt ist, wodurch sich eine verminderte Bautiefe ergibt,
- Fig. 3: eine der Figur 2 entsprechende Darstellung, wobei die obere Hälfte des Reflektors als konventioneller Paraboloid und die untere Hälfte erfindungsgemäß gebildet und mit gleicher Bautiefe ausgestattet sind, um die Effektivität der beiden Bauformen vergleichen zu können,
- Fig. 4: einen stark schematisierten Längsschnitt eines erfindungsgemäßen Reflektors, bei welchem ein der Öffnung näheres Stück einer Parabel nach innen zu der optischen oder Längsmittelachse hin und das dem Brennpunkt nahe Stück dieser Parabel entgegengesetzt verschwenkt oder verkippt und zu einem hohlen oder becherförmigen Reflektor verbunden sind, so dass der dem Brennpunkt und damit dem Leuchtmittel nahe Bereich dieses Reflektors von dem Brennpunkt einen größeren Abstand hat,
- Fig. 5: die Bildung eines etwa becherförmigen Reflektors, bei welchem in axialer Richtung unterschiedlich stark geneigte Parabelstücke aneinander gesetzt sind und der so gebildete Längsschnitt durch Rotation zu der Reflektorfläche wird,
- Fig. 6: eine Hälfte eines Reflektors gemäß Figur 5 mit der Abstrahlung von Licht an jeweils einzelnen Ringbereichen, die durch unterschiedlich geneigte Parabelstücke gebildet sind, wobei der besseren Übersicht wegen die Abstrahlung nur jedes zweiten Ringbereichs dargestellt ist, sowie
- Fig. 7: schematisiert und in schaubildlicher Darstellung einen Reflektor, der über einen Teil seines Umfangs erfindungsgemäß durch zur Längsmittelachse hin gekippte und zusammengesetzte Parabelstücke in Figur 6 über einen weiteren Teil des Umfangs durch einen Paraboloid und über einen dritten Teil des Umfangs durch einen Stufenreflektor gebildet ist, bei welchem nahe dem Brennpunkt eine Stufung vorgesehen ist, die zum Öffnungsrand hin in einen Paraboloid ausläuft und dort nicht mehr gestuft ist.

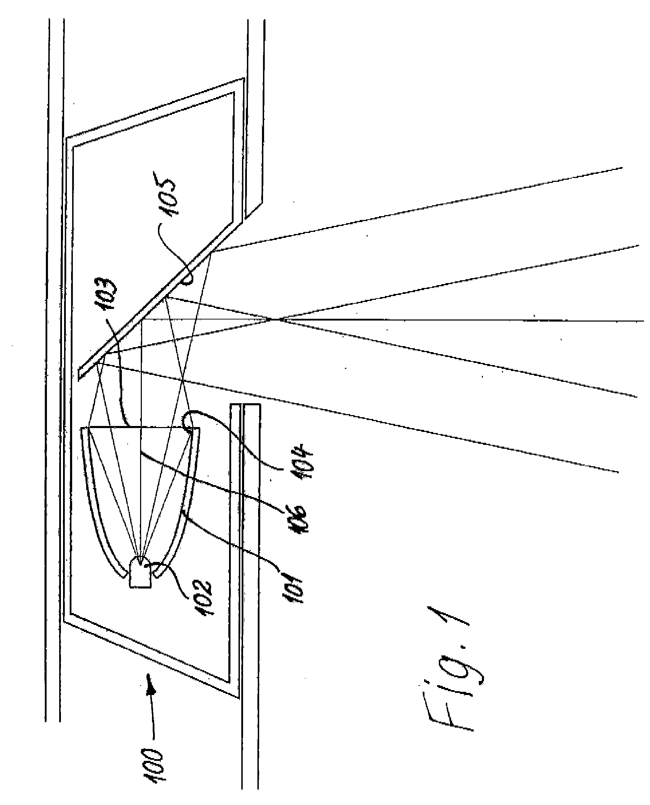

Eine im ganzen mit 100 bezeichnete Fahrzeugleuchte ist im Ausführungsbeispiel gemäß Figur 1 als Innenleuchte ausgebildet, könnte aber, was die Form ihres Reflektors 101 betrifft, auch als Scheinwerfer, Fahrradscheinwerfer, Tagfahrlicht, Begrenzungsleuchte, Rücklicht oder dergleichen eines Fahrzeugs ausgebildet sein.

Diese Fahrzeugleuchte 100 weist ein Leuchtmittel 102 und den schon erwähnten, gemäß den nachstehend näher beschriebenen Figuren hohlen oder etwa becherförmigen Reflektor 101 sowie zumindest ein Mittel 103 zum Streuen des von dem Leuchtmittel 102 abgegebenen und von dem Reflektor 101 abgestrahlten Lichts auf. Das Streumittel 103 könnte beispielsweise eine an der Öffnung 104 des etwa becherförmigen Reflektors 101 angeordnete Streuscheibe und/oder am Reflektor 101 angeordnete Streufacetten und/oder ein Umlenkreflektor 105 mit entsprechender Oberflächengestaltung sein.

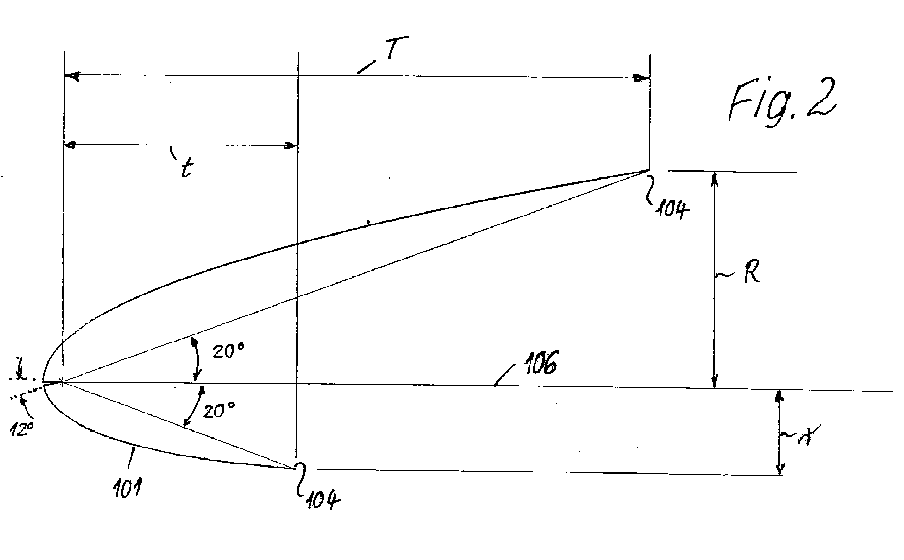

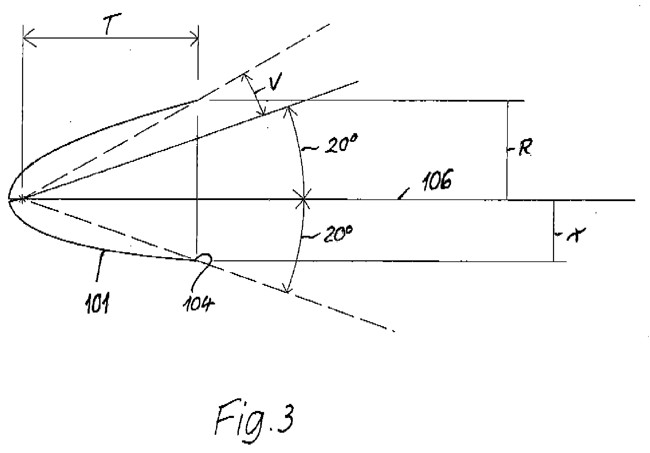

Die Kontur eines Längsschnitts durch die Längsmittelachse oder optische Achse 106 des Reflektors kann zumindest bereichsweise oder gemäß Figur 2 und 3 auch über den gesamten Verlauf eine Parabel sein, in deren Brennpunkt das Leuchtmittel 102 angeordnet ist beziehungsweise dessen Brennpunkt in diesem Leuchtmittel 102 liegt.

Dennoch ist der Reflektor 101 kein Paraboloid, sondern der Längsschnitt zumindest eines Teils dieses Reflektors 101 durch seine Längsmittelachse 106 ist über wenigstens einen Teil seiner Erstreckung oder gemäß der jeweils unteren Hälfte der Figuren 2 und 3 über die gesamte Erstreckung eine solche Parabel, die gegenüber der Längsmittelachse 106 um ihren Brennpunkt zu dieser Achse 106 so verschwenkt oder verkippt ist, dass ihr öffnungsnaher Bereich der Längsmittelachse 106 näher als eine zu einem Paraboloid gehörende Parabel zu liegen kommt. Dabei hat wenigstens ein Teil des Umfangs dieses Reflektors 101 eine Fläche, die durch Rotation der derart verschwenkten Parabel um die Längsmittelachse 106 gebildet ist.

In den Figuren 2 und 3 ist also der oberhalb der Längsmittelachse 106 dargestellte Parabelverlauf der Längsschnitt eines üblichen Paraboloids, während die untere Hälfte der Längsschnitt des Reflektors 101 mit einer verkippten und rotierten Parabel darstellt, um die sich dadurch ergebenden unterschiedlichen Reflektorformen vergleichen zu können. Ein Reflektor 101 einer Pahrzeugleuchte 100 kann aber auch aus solchen unterschiedlich gebildeten Flächen zusammengesetzt sein.

In Figur 2 ist für beide Parabeln, ausgehend von dem selben Brennpunkt der größte Winkel des vom Reflektor nicht mehr erfassten Lichts in gleicher Größe von etwa 20° dargestellt. Dabei wird deutlich, dass an einem konventionellen Paraboloid eine erheblich größere Baulänge erforderlich ist, um den selben Winkel für das nicht erfasste Licht zu erzielen, was gleichzeitig auch zu einem größeren öffnungsradius führt.

Bei der gewählten Parabel, die für beide Längsschnitte identisch ist, wobei aber die in der Zeichnung untere Parabel mit ihrem öffnungsnahen Bereich um den Brennpunkt um etwa 12° verschwenkt ist, ist der größte Winkel für nicht erfasstes Licht etwa 20°. Dabei erkennt man deutlich, dass bei der verdrehten beziehungsweise verkippten Parabel der Öffnungsradius r erheblich kleiner als der Öffnungsradius R der konventionellen Parabel eines Paraboloids ist, wobei in diesem Ausführungsbeispiel das Verhältnis R zu r etwa 2,5 beträgt.

Ein ähnliches oder übereinstimmendes Verhältnis ergibt sich auch zwischen der axialen Bautiefe T zu t.

Figur 2 zeigt deutlich, dass durch die Maßnahme, eine an sich als Längsschnitt eines Paraboloids für eine Leuchte 100 geeignete Parabel um ihren Brennpunkt so zu verkippen, dass der der Öffnung 104 des Reflektors 101 nahe Bereich dieser Parabel der optischen oder Längsmittelachse 106 angenähert wird, die Baugröße erheblich vermindert werden kann, wobei dennoch die Lichtausbeute etwa gleich bleibt.

In Figur 3 ist ein Vergleich zweier Reflektoren dargestellt, die eine übereinstimmende Baulänge oder Bautiefe T haben, wobei wiederum die obere Hälfte ein Paraboloid ist, dessen Längsschnitt eine Parabel bildet, während die untere Hälfte einen Reflektor 101 ist, dessen Längsschnitt die selbe Parabel ist, die aber um den Brennpunkt der Parabel in der schon beschriebenen Weise verkippt oder verschwenkt und in dieser Lage durch Rotation um die Längsmittelachse 106 zu einem becherförmigen Reflektor 101 geformt ist. Bei identischem Abstand T des Leuchtmittels beziehungsweise des Brennpunkts 102 von dem Rand der Öffnung 104 ergibt sich für den Paraboloid ein größerer Radius R, der um den Winkel V weniger Licht erfasst, als der Reflektor 101 gemäß der unteren Hälfte der Darstellung in Figur 3. Die Effektivität eines Reflektors gemäß dem unteren Längsschnitt, der selbstverständlich dann zu einem entsprechenden Gesamtlängsschnitt ergänzt ist, ist also erheblich hoher als die eines konventionellen Paraboloidreflektors.

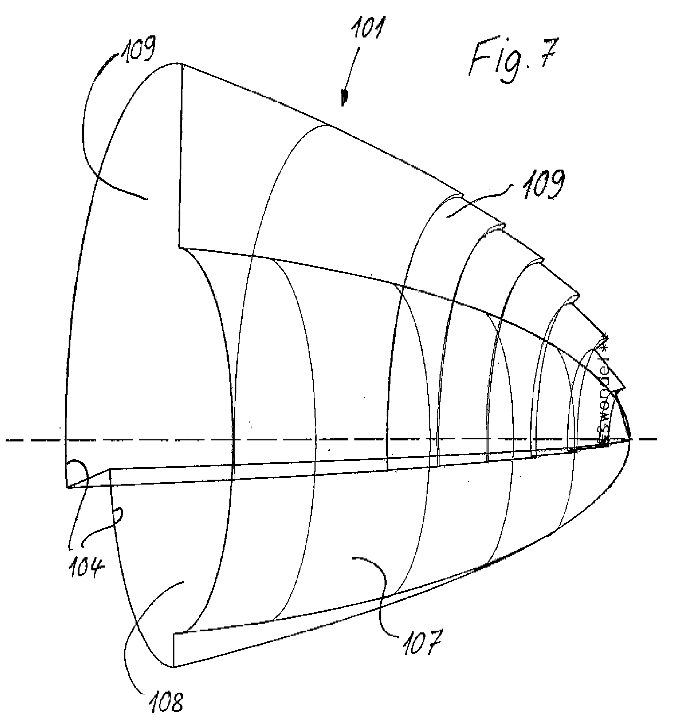

Gemäß Figur 1 sowie auch gemäß Figur 2 und 3 kann der Reflektor 101 insgesamt rotationssymmetrisch ausgebildet sein, wobei seine Längsschnitte, von denen in Figur 2 und 3 jeweils nur die Hälfte dargestellt sind, mit ihrem öffnungsnahen Bereich zur Längsmittelachse 106 hin verkippte oder verschwenkte übereinstimmende Parabeln sind. Dies ergibt die effektive Lichtausbeute gemäß Figur 3 bei entsprechend gegenüber Figur 2 verminderter Baugröße. Dabei ist der Reflektor 101 in diesem Ausführungsbeispiel ganz durch eine bis zu ihrem Scheitel verlaufende und mit dem der Öffnung 104 des Reflektors 101 nahen Seite zur Längsmittelachse 106 hin verkippten Parabel gebildet. Es wäre aber auch möglich und wird nachfolgend beispielsweise anhand der Figur 7 erläutert, dass auch nur teilweise verkippte Parabelbereiche oder auch mehrere Parabeln in entsprechender Weise zu einem Reflektor 101 geformt sein können.

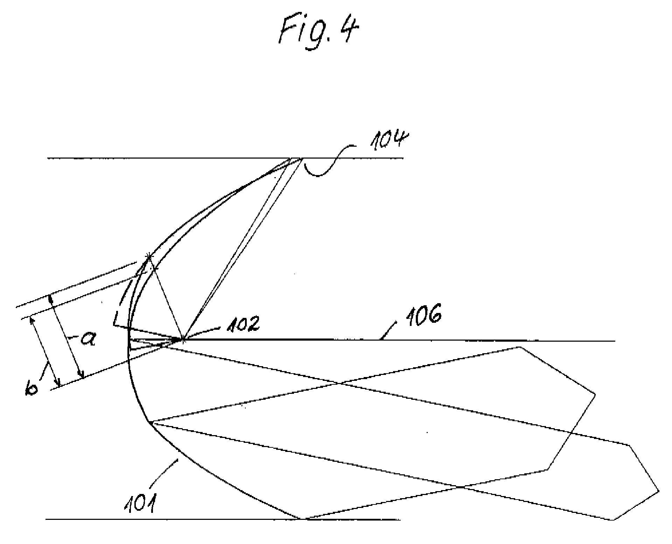

In Figur 4 ist ein Ausführungsbeispiel dargestellt, bei welchem nur ein Stück oder Teil einer Parabel, nämlich ein bis zur Öffnung 104 des Reflektors 101 reichender Teil der Parabel zur Längsachse 106 des Reflektors 101 hin nach innen und das dem Brennpunkt nahe Stück oder Teil dieser Parabel nicht oder, wie in Figur 4 dargestellt, sogar entgegengesetst verschwenkt oder verkippt ist. Diese Parabelstücke bilden den Längsschnitt oder eine Meridianlinie wenigstens eines Teil-Umfangsbereiches beziehungsweise gemäß Figur 4 des gesamten Umfangs dieses Reflektors 101 und gehen lückenlos ineinander über.

Die durch die Reflektorflächen, deren Längsschnitt verschwenkte oder verkippte Parabeln oder Parabelstücke sind, gebildeten Lichtflächen oder Lichtringe können durch Streumittel, beispielsweise Streuscheiben, zu einer Lichtfläche verbunden sein, wobei Flächen, deren Längsschnitt durch eine verkippte Parabel oder ein verkipptes Parabelstück gebildet ist, einen Lichtring oder einen Teil eines Lichtrings und Reflektorflächen, deren Längsschnitt aus unverkippten Parabelstücken bestehen, einen kreisförmigen oder teilkreisförmigen Lichtfleck bilden, wenn diese unverkippten Parabelstücke die dem Brennpunkt unmittelbar benachbarten Bereiche des Reflektors bilden.

In Figur 4 ist noch dargestellt, dass durch die Verschwenkung der den Längsschnitt des Reflektors 101 bildenden Parabel um den Brennpunkt der dem Leuchtmittel nahe Bereich des Reflektors einen größeren Abstand a erhält, als er sich an einer in Figur 4 in der oberen Hälfte zum Vergleich dargestellten unverkippten Parabel eines Paraboloids ergibt. Dieser Abstand ist mit b bezeichnet. Bei den dargestellten Maßverhältnissen der Figur 4 ist das Verhältnis a zu b 1,17, das heißt durch die Verkippung des dem Brennpunkt nahen Bereichs der Parabel vergrößert sich der Abstand zum Brennpunkt und damit zum Leuchtmittel 102 um 17%, so dass auch eine Glühbirne als Leuchtmittel verwendet werden kann, ohne Hitzeprobleme zu erzeugen.

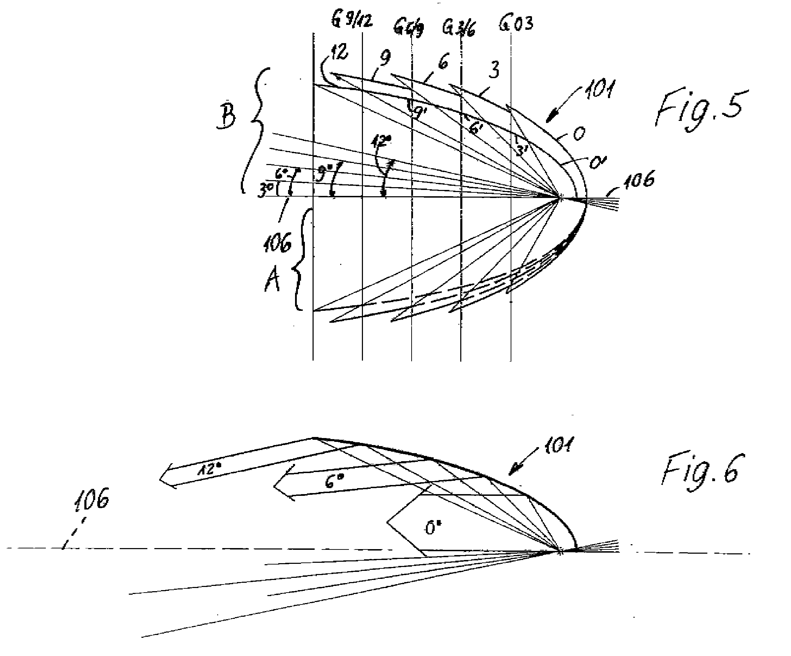

Figur 5 und 6 zeigt in schematisierter Darstellung einen Reflektor 101, bei welchem ringförmige Bereiche in Längsrichtung nebeneinander liegen, die durch unterschiedlich stark geneigte Parabelteile oder Parabelabschnitte gebildet und dann lückenlos zusammengesetzt sind, wobei in Figur 5 gleichzeitig die gedachte Entstehung eines derartigen Reflektor-Hohlkörpers dargestellt ist:

In der unteren Hälfte beziehungsweise im Teil A der Figur 5 ist eine im Scheitel abgeschnittene Parabel dargestellt, die um ihren Brennpunkt um 3°, 6°, 9° und 12° nach innen zur Längsmittelachse 106 hin verdreht beziehungsweise verkippt wurde. Die jeweils dadurch unterschiedlich verkippten Parabeln sind durch unterbrochene Linien dargestellt, die nur dort durchgezogen sind, wo sie später als Reflektorflächen Verwendung finden sollen. Welcher Teil der Parabeln 0, 3, 6, 9 und 12 für den Reflektor 101 benötigt wird, hängt davon ab, in welcher Richtung wieviel Licht abgestrahlt werden soll, das heißt, bei der Formung des Reflektors durch verkippte oder verschwenkte Parabelstücke kann vorherbestimmt werden, in welcher Richtung wieviel Licht abgestrahlt werden soll, wobei in Figur 5 für die einzelnen Teil in axialer Richtung gleich breite Bereiche vorgesehen sind, die durch die rechtwinklig zur Längsmittelachse 106 verlaufenden Geraden G0/3, G3/6, G6/9 und G9/12 gegeneinander begrenzt beziehungsweise voneinander abgeteilt sind.

Die obere Hälfte des Längsschnittes gemäß Figur 5 beziehungsweise der Bereich B zeigt die an der Rotationsachse oder Längsmittelachse 106 gespiegelten Teile 0, 3, 6, 9 und 12 der im Teil A jeweils einzeln dargestellten Parabeln.

Teil 12 wird unverändert beibehalten beziehungsweise verwendet. Teil 9 wird verkleinert, wobei das Zentrum der Skalierung der Brennpunkt ist, wie es durch die von dem Brennpunkt unter unterschiedlichen Winkeln zu den Endstücken der Teile 0, 3, 6, 9 und 12 dargestellt ist, so dass sich Teil 9 lückenlos an Teil 12 als Teil 9' anschließt. In gleicher Weise wird Teil 6 auf 6' verkleinert und an Teil 9' angeschlossen und so weiter. Die so erhaltene Kontur beziehungsweise der so gebildete Längsschnitt wird durch Rotation um die Längsmittelachse 106 in eine etwa becherförmige Hohlfläche überführt. Diese gemäß der vorstehenden Beschreibung gebildete Hohlfläche ist in Figur 6 zur Hälfte dargestellt, um daran die Abstrahlung verdeutlichen zu können, während in Wirklichkeit ein so gebildeter Reflektor symmetrisch aus einem derartigen rotierten Kurvenstück besteht. In Figur 6 sind für die Bereiche 0°, 6° und 12° die Abstrahlungen dargestellt, die auf einem weit entfernten Schirm für 3°, 6°, 9° und 12° Ringe und für 0° einen Kreis oder Punkt ergeben. Dabei wurde nur jede zweite Abstrahlung dargestellt, um das Prinzip zu verdeutlichen, dass die entsprechenden in Längsrichtung aneinander gesetzten, in ihrem Längsschnitt jeweils parabelförmigen, aber unterschiedlich verkippten Ringe des so gebildeten Reflektors gesielte Abstrahlungen unterschiedlicher Breite ergeben, die sich zu einem gewünschten Lichtfeld oder Lichtfleck ergänzen, wobei dies durch bekannte Streumittel unterstützt oder auch weiter abgewandelt werden kann.

Figur 7 zeigt ein Ausführungsbeispiel, bei welchem der Reflektor 101 einen sektorweise von einer Kreisform abweichenden Umfang hat, wobei die Querschnitte der einzelnen Sektoren jeweils aber Kreisbögen sind. Dabei erkennt man einen Sektor 107, dessen Längsschnitt durch eine wenigstens bereichsweise verschwenkte Parabel oder gemäß Figur 5 und 6 einzelne Parabelstücke gebildet ist, während ein benachbarter Sektor 108 ein Teil eines Paraboloids und ein dritter Sektor 109 ein Stufenreflektor ist.

Der der Öffnung 104 am weitesten abliegende Teil dieses Stufenreflektors ist durch Paraboloidsegmente gebildet und gestuft ausgebildet, während dieser Sektor 109 zum Öffnungsrand 104 in einen Paraboloid auslaufend geformt ist, dort also keine Stufen mehr bildet. Man erkennt deutlich, wie die Stufung zum Öffnungsrand 104 hin abnimmt.

Es sei erwähnt, dass dabei diese Stufen ihrerseits im Längsschnitt durch nach innen gekippte und über einen Teil der Längsmittelachse rotierte Parabelstücke oder an Parabelstücke angenäherte Kurvenstücke gebildet sein könnten. Dabei sind die Kippwinkel einzelner Parabelstücke oder an Parabeln angenäherter Kurvenstücke innerhalb der Stufung unterschiedlich und können nahe dem Brennpunkt am wenigsten verkippt oder verschwenkt sein.

Die verschiedenen Möglichkeiten, einen Längsschnitt eines Reflektors aus einer verkippten Parabel oder aus Stücken einer solchen verkippten Parabel und dabei unterschiedlich gekippten Parabelstücken zu bilden, kann also auch in unterschiedlicher Weise kombiniert und sogar mit solchen Reflektorteilen kombiniert sein, die eine andere Längsschnittform, beispielsweise einen nicht verkippten Parabelverlauf oder auch eine andere Krümmung haben können, um bestimmte Lichtflecke, sei es einzelne Lichtflecke, sei es ineinander übergehende Lichtflecke und so weiter vorzugeben und somit bestimmte Flächen gezielt beleuchten zu können.

Durch das Verkippen der einen Längsschnitt des Reflektors bildenden Parabel lässt sich die Baugröße vermindern, so dass auch beispielsweise an oder in einem Fahrzeug weniger Bauraum benötigt wird. Gleichzeitig lässt sich dadurch Material einsparen. Das abgestrahlte Licht verläuft dann zwar nicht mehr parallel zur optischen Achse, was jedoch in den Fällen keinen Nachteil bedeutet, in denen kein achsparalleles Licht benötigt wird. Erst recht werden diese Vorteile nutzbar, wenn der Reflektor sektorweise oder radial im Wechsel mit anderen Reflektorarten kombiniert wird.

Bei einer Fahrzeugleuchte 100 mit einem Leuchtmittel 102, mit einem hohlen oder etwa becherförmigen Reflektor 101 und mit zumindest einem Mittel zum Streuen des von dem Leuchtmittel 102 abgegebenen und von dem Reflektor 101 abgestrahlten Lichts wird die Reflektorfläche dadurch gebildet, dass zunächst eine Parabel mit Brennpunkt, der der Ort des Leuchtmittels 102 ist, und mit einer zugehörigen Parabelachse konstruiert. Dann wird diese Parabel im Scheitel geteilt, ein Teil gelöscht oder weggedacht und der andere Teil um den Brennpunkt um einen Winkel in der Richtung verkippt oder verschwenkt, in der sich der Scheitel von der ursprünglichen Parabelachse entfernt, das heißt, das der Öffnung des Reflektors 101 nahe Ende der Parabel wird in Richtung zu der Parabel- oder Längsmittelachse 106 hin verschwenkt. Durch Rotation dieser verkippten Parabel um die ursprüngliche Parabelachse oder Längsmittelachse 106 wird die Reflektorinnenfläche gebildet, wobei auch nur Teile des Umfangs oder des Längsschnitts des Reflektors 101 durch entsprechende Flächenstücke gebildet sein können.

## Patentansprüche

1. Fahrzeugleuchte(100) mit einem Leuchtmittel (102), mit einem hohlen oder etwa becherförmigen Reflektor (101) und mit zumindest einem Mittel zum Streuen des von dem Leuchtmittel (102) abgegebenen und von dem Reflektor (101) abgestrahlten Lichts, beispielsweise mit einer an der Öffnung (104) des Reflektors (101) angeordneten Streuscheibe und/oder mit am Reflektor (101) angeordneten Streufacetten, wobei die Kontur eines Längsschnitts durch die Längsmittelachse (106) des Reflektors zumindest bereichsweise eine Parabel ist, in deren Brennpunkt das Leuchtmittel (102) angeordnet ist beziehungsweise dessen Brennpunkt in dem Leuchtmittel (102) liegt, **dadurch gekennzeichnet, dass** der Längsschnitt zumindest eines Teils des Reflektors (101) durch seine Längsmittelachse (106) über wenigstens einen Teil seiner Erstreckung den Verlauf einer Parabel aufweist, die gegenüber der Längsmittelachse (106) um ihren Brennpunkt zu dieser Achse (106) so verschwenkt ist, dass ihr öffnungsnaher Bereich der Längsmittelachse (106) angenähert ist, und dass wenigstens ein Teil des Umfangs des Reflektors (101) eine Fläche hat, die durch Rotation der verschwenkten Parabel um die Längsmittelachse (106) gebildet ist.

2. Fahrzeugleuchte nach Anspruch 1, **dadurch gekennzeichnet, dass** der Reflektor (101) insgesamt rotationssymmetrisch ausgebildet ist und seine Längsschnitte mit ihrem öffnungsnahen Bereich zur Längsmittelachse (106) hin verkippte oder verschwenkte übereinstimmende Parabeln sind.

3. Fahrzeugleuchte nach Anspruch 1 oder 2, **dadurch gekennzeichnet, dass** der Reflektor (101) ganz oder teilweise durch eine oder mehrere bis zu ihrem Scheitel verlaufende und mit dem der Öffnung des Reflektors (101) nahen Seite zur Längsmittelachse (106) hin verkippte Parabeln gebildet ist.

4. Fahrzeugleuchte nach Anspruch 1 oder 2, **dadurch gekennzeichnet, dass** nur ein Stück oder Teil einer Parabel, nämlich ein bis zur Öffnung (104) des Reflektors (101) reichender Teil der Parabel zur Längsachse (106) des Reflektors (101) hin nach innen und das dem Brennpunkt und dem Scheitel nahe Stück der Parabel nicht oder entgegengesetzt verschwenkt oder verkippt ist und dass diese Parabelstücke den Längsschnitt oder eine Meridianlinie wenigstens eines Teil-Umfangsbereichs des Reflektors (101) bilden.

5. Fahrzeugleuchte nach einem der Ansprüche 1 bis 4, **dadurch gekennzeichnet, dass** durch die Reflektorflächen, deren Längsschnitt verschwenkte oder verkippte Parabeln oder Parabelstücke sind, gebildete Lichtflächen oder Lichtringe durch Streumittel zu einer Lichtfläche verbunden sind, wobei Flächen, deren Längsschnitt durch eine verkippte Parabei oder ein verkipptes Farabelstück gebildet ist, einen Lichtring oder einen Teil eines Lichtringes und Reflektorflächen, deren Längsschnitt aus unverkippten Parabelstücken bestehen, einen kreisförmigen oder teilkreisförmigen Lichtfleck bilden.

6. Fahrzeugleuchte nach einem der Ansprüche 1 bis 5, **dadurch gekennzeichnet, dass** durch die Verschwenkung der den Längsschnitt des Reflektors (101) bildenden Parabel um den Brennpunkt der dem Leuchtmittel nahe Bereich des Reflektors einen größeren Abstand von dem Leuchtmittel erhält.

7. Fahrzeugleuchte nach einem der Ansprüche 1 bis 6, **dadurch gekennzeichnet, dass** der Reflektor (101) einen sektorweise von einer Kreisform abweichenden Umfang hat und neben einem oder mehreren Bereichen, deren Längsschnitt durch eine wenigstens bereichsweise verschwenkte Parabel gebildet ist, paraboloide Abschnitte oder in anderer Weise gekrümmte Reflektorabschnitte oder Sektoren (108, 109) aufweist.

8. Fahrzeugleuchte nach einem der Ansprüche 1 bis 7, **dadurch gekennzeichnet, dass** der Reflektor (101) gestuft ist und die einzelnen Stufen aus im Längsschnitt nach innen gekippten und wenigstens über einen Teil um die Längsmittelachse rotierten Parabelstücken oder an Parabelstücke angenäherten Kurvenstücken oder Geraden oder Bögen bestehen.

9. Fahrzeugleuchte nach Anspruch 8, **dadurch gekennzeichnet, dass** die Kippwinkel einzelner Parabelstücke oder an Parabeln angenäherter Kurvenstücke innerhalb der Stufung des gestuften Reflektors (101) unterschiedlich sind.

10. Fahrseugleuchte nach Anspruch 8 oder 9, **dadurch gekennzeichnet, dass** die dem Brennpunkt und somit dem Leuchtmittel (102) am nächsten liegende Stufe einen Längsschnitt in Form einer Parabel oder eines Parabel- oder sonstigen Kurvenstücks gegenüber anderen Stufen am wenigsten verkippt oder verschwenkt ist und der Verkippungswinkel der einzelnen Längsschnitt-Kurven zur Öffnung (104) des Reflektors (101) hin mehr und mehr zunimmt.

11. Fahrzeugleuchte nach einem der vorstehenden Ansprüche, **dadurch gekennzeichnet, dass** sie einen Scheinwerfer, Pahrradscheinwerfer, ein Tagfahrlicht, eine Begrenzungsleuchte, eine Innenleuchte, ein Rücklicht oder dergleichen insbesondere für Kraftfahrzeuge ist.
